(19)

Europäisches Patentamt

European Patent Office

Office européen des brevets

(11) **EP 4 438 258 A1**

(12) **EUROPEAN PATENT APPLICATION**

published in accordance with Art. 153(4) EPC

(43) Date of publication:
**02.10.2024 Bulletin 2024/40**

(21) Application number: **22898545.3**

(22) Date of filing: **21.11.2022**

(51) International Patent Classification (IPC):
***B27N 3/04*** *(2006.01)*        ***B29B 7/48*** *(2006.01)*
***B29B 7/72*** *(2006.01)*

(52) Cooperative Patent Classification (CPC):
**B27N 3/04; B29B 7/48; B29B 7/72**

(86) International application number:
**PCT/JP2022/043078**

(87) International publication number:
**WO 2023/095762 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2021 JP 2021191413**

(71) Applicant: **Sumitomo Forestry Co., Ltd.
Tokyo 100-8270 (JP)**

(72) Inventors:
• **KAKITANI, Tomo
Tokyo 100-8270 (JP)**
• **SAKAI, Toshiyuki
Tokyo 100-8270 (JP)**

(74) Representative: **Novagraaf Technologies
Bâtiment O2
2, rue Sarah Bernhardt
CS90017
92665 Asnières-sur-Seine Cedex (FR)**

(54) **METHOD FOR PRODUCING MIXED COMPOSITION**

(57)     A method for producing a mixed composition composed of a lignocellulosic fiber and a molten thermoplastic resin that are kneaded together, the mixed composition being for use as a fiber reinforced resin material, the method including: a kneading step of kneading the lignocellulosic fiber (A) and the thermoplastic resin (B) together using a multi screw extruding machine (1) equipped with two or more screws (3), wherein the multi screw extruding machine (1) includes: a cylinder (2) that internally has a kneading space in which the screws (3) are provided; and a heating device (8) that is provided on an outer circumferential portion of the cylinder (2) and includes a plurality of heating units (81) arranged in an axial direction of the cylinder (2), and, in the kneading step, the lignocellulosic fiber (A) and the thermoplastic resin (B) are kneaded together while maintaining set temperatures of the heating units (81) anywhere in the axial direction at a temperature less than a melting point of the thermoplastic resin (B).

Fig. 1

EP 4 438 258 A1

## Description

## Technical Field

The present invention relates to a method for producing a mixed composition, and a fiber resin reinforced material and a molded article that each contain the mixed composition produced using the production method.

## Background Art

Lignocellulose resources derived from wood and non-wood plants store carbon dioxide during their growth process, and they are therefore recognized as a carbon neutral material that does not emit excess carbon dioxide during use and disposal thereof.

Lignocellulose resources obtained from wood and non-wood plants are composed of lignocellulosic fibers. The lignocellulosic fibers can be obtained by treating the lignocellulose resources mechanically, thermomechanically, chemically, chemo-mechanically, or chemo-thermomechanically to soften, break, loosen, or fibrillate an intermediate layer that adhesively bundles the fibers. The lignocellulosic fibers obtained in the above-described manner are mainly used to produce a pulp used as a raw material for paper or a raw material for fiberboard. The reason is that lignocellulosic fibers are renewable and low in cost while being light in weight, highly strong, and highly elastic.

In order to solve environmental issues as typified by global warming in recent years, lignocellulosic fibers are expected to be used as an alternative to materials conventionally used as reinforcing materials for reinforcing resin such as talc, glass fibers, synthetic resin fibers, mineral fibers, metal fibers, and asbestos fibers. By replacing conventionally used non-renewable materials with lignocellulosic fibers, advantages such as weight reduction of materials, improvement of LCA (Life Cycle Assessment), and cost reduction can be obtained. For this reason, the use of lignocellulosic fibers is attracting attention in the transportation equipment manufacturing industry, in particular, the automobile manufacturing industry.

However, a lignocellulosic fiber is composed mainly of three components including cellulose, hemicellulose, and lignin. Hemicellulose and lignin are less thermally stable than cellulose, and thus undergo heat denaturation when they are kneaded with a thermoplastic resin, which may likely cause problems such as generation of gas, odor, discoloration, tar, and VOCs (Volatile Organic Compounds), an excessive increase in resin pressure, a pulsation during strand squeezing, a strand breakage, a skin layer fracture, an increase of brittleness of the kneaded product, and a reduction of mechanical properties.

For this reason, when producing a composition of a lignocellulosic fiber and a thermoplastic resin by kneading the lignocellulosic fiber and the resin together, the use of an expensive cellulose material is required such as a highly pure, so-called dissolved cellulose (high purity cellulose) or a chemically modified cellulose with high thermal stability, which causes a problem of high cost.

## Citation List

Patent Literature

Patent Literature 1: US 2009234047A1
Patent Literature 2: JP 2004-35705A
Patent Literature 3: JP 2021-84999A
Patent Literature 4: WO 0021743A1
Patent Literature 5: JP 2004-277623A
Patent Literature 6: JP 2011-231237A
Patent Literature 7: JP 2021-66789A

## Summary of Invention

In the case of using a lignocellulosic fiber that contains lignin or hemicellulose as a raw material and a conventionally used general-purpose kneading apparatus for kneading a fiber and a resin together that is capable of continuous production while solving the problems described above, it is preferable to develop a kneading method for kneading a lignocellulosic fiber and a resin such that the lignocellulosic fiber is unlikely to undergo thermal decomposition, and various techniques have been proposed (see Patent Literatures 1 to 7).

Patent Literature 1 discloses a technique for kneading a lignocellulosic fiber and a polyamide resin together, wherein the lignocellulosic fiber is treated with an alkali to impart thermal stability. However, an additional step of treating the lignocellulosic fiber with an alkali is required, which causes a problem of cost increase.

Patent Literature 2 discloses a technique for avoiding thermal decomposition of a lignocellulosic fiber during kneading, wherein the use of materials is limited to: a pulp with low hemicellulose content and low lignin content; and a polyamide or co-polyamide with a melting point of 200°C or less. However, the use of a polyamide with a low melting point as described above is problematic in that it is more expensive in cost than the use of general purpose polyamide 6. Also, it is clearly seen that the technique tries to avoid the use of hemicellulose and lignin by using a pulp, or in other words, the technique is made based on the understanding that the presence of hemicellulose and lignin is a technical barrier.

Patent Literature 3 discloses a resin composition of a chemically modified nano-sized cellulose and polyamide 6. However, as described above, there is a problem of cost increase due to chemical modification.

Patent Literature 4 discloses a technique for kneading a high-purity cellulose (with an alpha cellulose purity of 80% or more) and a polyamide together. However, the technique also has a problem of high raw material cost. In addition, there is no disclosure of kneading a lignocellulosic fiber that contains hemicellulose and lignin, from which it can be clearly seen that it is common sense among those skilled in the art that the use of hemicellulose or lignin is out of technical options.

Patent Literature 5 discloses a technique in which a resin is thermally softened with frictional heat using a high-speed stirring apparatus, and a lignocellulosic fiber and a polyolefin are kneaded together at a temperature less than or equal to the melting point of the resin. However, the kneading apparatus used in the technique is a batch type kneading apparatus, which has lower productivity than a multi screw extruding/kneading apparatus that can perform kneading and discharging continuously. For this reason, there is a problem of cost increase.

Patent Literature 6 also discloses a technique for kneading a high-purity cellulose (with an alpha cellulose purity of 80% or more) and a polyolefin together with frictional heat using a high-speed stirring apparatus. However, the technique requires the use of a batch type stirring apparatus and a high-purity cellulose, and thus has a problem of cost increase.

Patent Literature 7 discloses a technique for kneading a chemically modified high-purity cellulose with a resin together with an alkali metal salt. However, the technique also has a problem of cost increase due to chemical modification and the use of a high-purity cellulose as described above.

The inventors of the present application conducted in-depth studies to solve the problems described above. As a result, they succeeded in producing a composition of a lignocellulosic fiber and a thermoplastic resin that has excellent presentation performance and in which a thermal history received by the lignocellulosic fiber is reduced without causing solidification and deposition of the resin and clogging with the resin even when the lignocellulosic fiber that contains lignin is introduced into a multi screw extruding machine equipped with two or more screws, and the heater temperature of a kneading apparatus used to knead the lignocellulosic fiber and the thermoplastic resin is set to a temperature less than the melting point of the thermoplastic resin, and they found that the problems described above can be thereby solved. As used herein, the term "presentation performance" refers collectively to impressions given to people such as appearance, touch, and odor.

The present invention has been accomplished after conducting further studies based on the above-described findings.

The present invention provides a method for producing a mixed composition composed of a lignocellulosic fiber and a molten thermoplastic resin that are kneaded together, the mixed composition being for use as a fiber reinforced resin material, the method including: a kneading step of kneading the lignocellulosic fiber and the thermoplastic resin together using a multi screw extruding machine equipped with two or more screws, wherein the multi screw extruding machine includes: a cylinder that internally has a kneading space in which the screws are provided; and a heating device that is provided on an outer circumferential portion of the cylinder and includes a plurality of heating units arranged in an axial direction of the cylinder, and in the kneading step, the lignocellulosic fiber and the thermoplastic resin are kneaded together while maintaining set temperatures of the heating units anywhere in the axial direction at a temperature less than a melting point of the thermoplastic resin.

Also, the present invention provides a method for producing a mixed composition composed of a lignocellulosic fiber and a molten thermoplastic resin that are kneaded together, the mixed composition being for use as a fiber reinforced resin material, the method including: a kneading step of kneading the lignocellulosic fiber and the thermoplastic resin together using a multi screw extruding machine equipped with two or more screws, wherein the multi screw extruding machine includes: a cylinder that internally has a kneading space in which the screws are provided; and a heating device that is provided on an outer circumferential portion of the cylinder and includes a plurality of heating units arranged in an axial direction of the cylinder, and the kneading step includes: a high temperature kneading step; and a low temperature kneading step performed after the high temperature kneading step, when a heating region that can be heated by the heating device of the multi screw extruding machine is divided into a plurality of sections in the axial direction of the cylinder, each section including one or more of the plurality of heating units, the high temperature kneading step being the step of kneading the lignocellulosic fiber and the thermoplastic resin together while maintaining the set temperature of the one or more heating units in at least one of the plurality of sections at a temperature greater than or equal to a melting point of the thermoplastic resin to obtain a mixture of the lignocellulosic fiber and the molten thermoplastic resin, and the low temperature kneading step being the step of kneading the mixture while maintaining the set temperature of the one or more heating units in at least one of the plurality of sections at a temperature less than the melting point of the thermoplastic resin.

Also, the present invention provides a fiber reinforced resin material that contains the mixed composition produced using the above-described method for producing a mixed composition.

Also, the present invention provides a molded article that contains the mixed composition produced using the above-described method for producing a mixed composition.

**Brief Description of Drawings**

[Fig. 1] Fig. 1 is a schematic diagram showing a twin screw extruding machine that is an example of a screw extruding machine used in the present invention.
[Fig. 2] Fig. 2 is a perspective plan view of two screws that are provided parallel to each other as viewed from above, with a cylinder being not shown.

**Description of Embodiments**

Hereinafter, the present invention will be described in detail based on preferred embodiments thereof.

A method for producing a mixed composition according to the present invention is a method for producing a mixed composition composed of a lignocellulosic fiber and a molten thermoplastic resin that are kneaded together, the mixed composition being for use as a fiber reinforced resin material.

The lignocellulosic fiber and the thermoplastic resin used in the method for producing a mixed composition of the present invention will be described.

Lignocellulosic Fiber

The lignocellulosic fiber used in the present invention is a lignocellulosic fiber obtained by mechanically, thermomechanically, chemically, chemo-mechanically, or chemo-thermomechanically treating a wood or non-wood plant derived lignocellulose material to soften or break an intermediate layer that adhesively bundles the fiber, or loosen or fibrillate the fiber. As the lignocellulosic fiber, any of lignocellulosic fibers obtained as described above can be used without a particular limitation. The wood may be needle-leaved trees or broadleaved trees. Examples of non-wood plant derived lignocellulosic fibers include a straw pulp, a bagasse pulp, a reed pulp, a kenaf pulp, a linen pulp, a ramie pulp, a hemp pulp, a flax pulp, a bamboo pulp, and the like. Furthermore, the fibers and the pulps may also include those in the form of a powder such as wood flour, a finely ground product, and sawdust.

As the lignocellulosic fiber used in the present invention, for example, a lignocellulose powder, a semi-chemical pulp, a chemical ground pulp, a refiner ground pulp, a thermo mechanical pulp, or a groundwood pulp is preferably used. From the viewpoint of cost, the lignocellulosic fiber contains lignin in an amount of 5% or more. More particularly, it is preferable to use a mechanical pulp or a fiberboard fiber from the viewpoint of production efficiency, physical properties, and cost. The mass ratio of lignin in the lignocellulosic fiber is preferably 5% or more and 50% or less, more preferably 10% or more and 50% or less, and even more preferably 15% or more and 50% or less.

Examples of the mechanical pulp include a refiner ground pulp, a thermo mechanical pulp, a groundwood pulp, and the like. From the same viewpoint, it is more preferable to use a thermo mechanical pulp. The thermo mechanical pulp also includes a fiberboard fiber. As used herein, the term "fiberboard fiber" refers to a thermo mechanical pulp in a broad sense, and a relatively coarse fiber in a narrow sense.

An example of a physical form of the fiber is a thermo mechanical pulp with a diameter of 30 $\mu$m and a length of about 2 to 3 mm. Other examples include: a cellulose nanofiber (hereinafter also referred to as "nano lignocellulosic fiber") that is a fiber whose length and width are reduced to nano sizes; and a cellulose microfiber (hereinafter also referred to as "lignocellulosic microfiber") that is a fiber in which nano-sized or micro-sized fibers are mixed in the length and width directions.

The lignocellulosic fiber has a length of preferably 0.1 mm or more and 5.0 mm or less, more preferably 0.2 mm or more and 4.5 mm or less, and even more preferably 0.3 mm or more and 4.0 mm or less.

The lignocellulosic fiber has a diameter of preferably 5 $\mu$m or more and 50 $\mu$m or less, more preferably 10 $\mu$m or more and 50 $\mu$m or less, and even more preferably 20 $\mu$m or more and 50 $\mu$m or less.

Unlike pulps that have been bleached (delignified) to a certain extent, lignocellulosic fibers contain lignin. The lignocellulosic fiber may be composed of a single type of lignocellulosic fiber or a combination of two or more types of lignocellulosic fibers.

As the method for forming a lignocellulose material into a lignocellulosic fiber, a known method can be used without a particular limitation. It is possible to use, for example, a conventional method for producing a pulp, a conventional method for producing a fiberboard fiber, a mill that crushes chips and the like into powder, and the like as appropriate.

As an example of the method for forming a lignocellulose material into a lignocellulosic fiber, the following method can be used. A lignocellulose material is crushed into chips, the crushed lignocellulose material is thereafter steamed using a pre-heater or pre-steamer while applying a pressure of about 1 to 10 Bar to soften lignin and hemicellulose that are components constituting the lignocellulose material, and then the steamed lignocellulose material is defibrated into a fiber or a fiber bundle using a disc-type blade in a pressure refiner while applying a pressure to produce a desired fiber.

The length and the width of the lignocellulosic fiber used in the present invention can be adjusted to a desired length and a desired width as appropriate by adjusting the operating conditions for operating the refiner such as disc spacing.

In the case of obtaining a lignocellulosic fiber in the form of a fiber with a large aspect ratio, it is efficient that the lignocellulosic fiber is produced through a hydrothermal step as described above, and the resulting lignocellulosic fiber will be less damaged. On the other hand, in the case of obtaining a lignocellulosic fiber in the form of a powder with a low aspect ratio such as wood flour, a pulverizing apparatus or a mill can be used. The apparatus used varies depending on the type of electric power or thermal energy used, and the evaluation of greenhouse gas emissions varies depending on the material. For this reason, the apparatus can be selected according to the purpose.

In the case of obtaining a cellulose nanofiber or microfiber, any known method can be used such as a method in which a raw material fiber is mechanically fibrillated into a fiber of a desired size, a method in which a raw material fiber is chemically modified and then fibrillated in water or a resin by applying an external force, or a combination thereof.

Also, in many cases, the lignocellulosic fiber is dried for the purpose of transportation and storage, as well as improving preservation and handling. As the method for drying the lignocellulosic fiber, a known drying method can be used without a particular limitation. Examples of the drying method include: a method that is used in the paper and pulp industry and in which a wet lignocellulosic fiber is discharged onto a roller or wire, dehydrated through suction or pressurization, and then heat dried; a method that is used in the production of a fiberboard fiber and in which a wet lignocellulosic fiber is heat dried in a tube in which hot air flows under a flow of air; and the like. The lignocellulosic fiber is dried at a temperature of, for example, preferably 60 to 200°C, more preferably 80 to 160°C, and even more preferably 100 to 140°C.

In recent years, a method for producing a fibrated fiber or a fiber under a dry condition without using a hydrothermal condition is also widely used. From the viewpoint of cost and quality, even fibers other than those produced under a hydrothermal condition may be accepted depending on the case. In this case, a fiber produced under a dry condition may be used.

Thermoplastic Resin

The thermoplastic resin used in the present invention preferably has a melting point of 260°C or less. Also, the thermoplastic resin used in the present invention is required to have a certain level of heat resistance, and thus preferably has a melting point of 100°C or more.

Examples of the thermoplastic resin used in the present invention include polyethylene, polypropylene, polyvinyl alcohol, polyvinyl acetate, polyoxyethylene, polyvinyl chloride, polystyrene, polylactic acid, polyacetal, polyamides, polyhydroxyalkanes, polybutylene terephthalate, polybutylene succinate, modified resins thereof, copolymer resins thereof, polymer alloys thereof, and the like.

The thermoplastic resin may be in the form of a compression molded body, a powder, a granule, or a fiber. However, the thermoplastic resin is preferably in the form of a pellet.

The thermoplastic resin has a melting point of preferably 100 to 260°C, more preferably 105 to 200°C, and even more preferably 110 to 180°C.

Multi Screw Extruding Machine

In the present invention, a multi screw extruding machine equipped with two or more screws is used to obtain a mixed composition of a lignocellulosic fiber and a thermoplastic resin. Examples of the multi screw extruding machine used in the present invention include: a twin screw extruding machine equipped with two screws; and a multi screw extruding machine equipped with three or more screws.

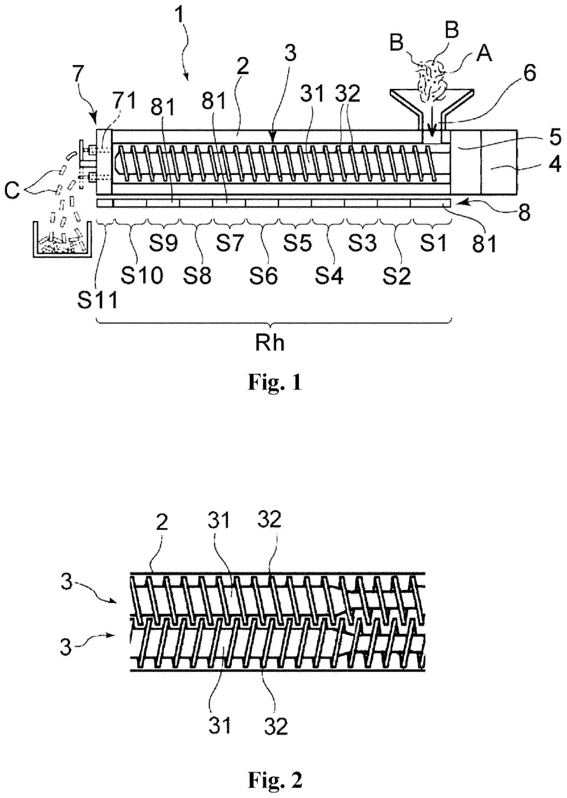

Fig. 1 shows a twin screw extruding machine 1 that is an example of a screw extruding machine used in the present invention. The twin screw extruding machine 1 includes two kneading screws 3, a cylinder 2, a heating device 8, a nozzle portion 7 that has an extrusion port 71, a material introducing portion 6, and a degassing portion (not shown) for vacuum degassing a gas component generated during kneading. The cylinder 2 internally has a kneading space in which the screws 3 are provided. As shown in Figs. 1 and 2, in the twin screw extruding machine 1, the two screws 3 are rotatably provided side by side in the kneading space of the cylinder 2, with screw shafts 31 of the screws 3 that are rotation shafts being provided in parallel to each other. As shown in Fig. 2, each of the screw shafts 31 includes screw blades 32 that interlock with each other. The heating device 8 includes a plurality of heating units 81 that are arranged on the outer circumferential portion of the cylinder 2 in the axial direction of the cylinder 2. The plurality of heating units 81 are arranged in the axial direction of the cylinder 2 between the material introducing portion 6 and the nozzle portion 7. As the heating units 81, for example, heaters equipped with a heating wire, heaters through which a hot heat medium flows, or the like can be used.

The twin screw extruding machine 1 includes, for example, an electric motor as a driving source 4 for driving the two screws 3. Each of the two screw shafts 31 rotates as a result of power from the driving source 4 being transmitted to the screw shafts 31 of the two screws 3 via a power transmission system 5 such as a gear mechanism.

The twin screw extruding machine 1 includes a heating region Rh that can be heated by the heating device 8. The heating region Rh extends in the axial direction of the cylinder 2. In the twin screw extruding machine 1 shown in Fig. 1, the heating units 81 of the heating device 8 are provided in the heating region Rh. The heating region Rh can be divided into a plurality of sections S1 to S11 in the axial direction of the cylinder 2. As used herein, the sections mean regions whose temperature can be controlled independently. In the twin screw extruding machine 1 shown in Fig. 1, the heating region Rh is divided into eleven sections S1 to S11, in each of which one heating unit 81 is provided when the heating region Rh is viewed in the axial direction of the cylinder 2. The number of heating units 81 provided in each section is not limited to one, and a plurality of heating units 81 may be provided in each section. As a result of at least one heating unit 81 being provided in each section, the twin screw extruding machine 1 can perform temperature control suitable for each stage such as kneading or transferring the material. The number of sections is not limited to eleven. The number of sections may be one, or two or more and ten or less, or twelve or more.

The screw extruding machine used in the present invention may be equipped with one screw or three or more screws. However, considering economic and technical convenience, it is preferable to use a twin screw extruding machine. The twin screw extruding machine can be classified into two types: a counter-rotating extruding machine in which the screw shafts rotate in opposite directions; and a co-rotating extruding machine in which the screw shafts rotate in the same direction. From the viewpoint of efficiency of introducing and compressing the lignocellulosic fiber and the thermoplastic resin, the screw extruding machine used in the present invention is preferably a co-rotating extruding machine, and more preferably a co-rotating twin screw extruding machine 1.

The cylinder 2 is made using a metal. As a result of the cylinder 2 being made using a metal, heat applied by the heating units 81 of the heating device 8 is transferred to the lignocellulosic fiber and the thermoplastic resin kneaded in the kneading space of the cylinder 2. As the metal used to make the cylinder 2, in general, it is preferable to use iron, which is highly strong and highly heat resistant, or an alloy thereof.

The heating units 81 are arranged to be capable of heating the lignocellulosic fiber and the thermoplastic resin in the kneading space of the cylinder 2. In the twin screw extruding machine 1, the heating units 81 are provided in contact with or close to the outer circumferential portion of the cylinder 2. The heating units 81 may be provided in recess portions or insertion portions formed in the outer circumferential portion of the cylinder 2.

Method for Producing Mixed Composition

Hereinafter, a method for producing a mixed composition according to a first embodiment that is a preferred embodiment of the present invention will be described based on an example in which a mixed composition is produced using the above-described twin screw extruding machine 1. The production method according to the first embodiment includes a kneading step.

In the production method of the first embodiment, first, a mixture of a lignocellulosic fiber A and a thermoplastic resin B is introduced or a lignocellulosic fiber A and a thermoplastic resin B are separately introduced into the twin screw extruding machine 1 from the material introducing portion 6, with the two screws 3 being rotated. Specifically, the lignocellulosic fiber A and the thermoplastic resin B may be mixed in advance before introducing into the twin screw extruding machine 1. Alternatively, the lignocellulosic fiber A and the thermoplastic resin B may be introduced into the twin screw extruding machine 1 from the same introducing port or different introducing ports of the material introducing portion 6 such that the lignocellulosic fiber A and the thermoplastic resin B are mixed in the twin screw extruding machine 1.

The lignocellulosic fiber A and the thermoplastic resin B introduced from the introducing port(s) are forcibly drawn into the interlocking spaces of the screw blades 32 by rotation of the screws 3.

Then, a kneading step is performed in the twin screw extruding machine 1. In the kneading step, by rotation of the screws 3, the lignocellulosic fiber A and the thermoplastic resin B are forcibly transferred to the downstream side where the nozzle portion 7 is provided.

In the kneading step, the lignocellulosic fiber A and the thermoplastic resin B are kneaded together while maintaining the set temperatures of the heating units 81 anywhere in the axial direction of the cylinder 2 at a temperature less than the melting point of the thermoplastic resin B. Specifically, the lignocellulosic fiber A and the thermoplastic resin B introduced from the material introducing portion 6 are forcibly drawn into the interlocking spaces of the screw blades 32 by rotation of the screws 3, and the lignocellulosic fiber A and the thermoplastic resin B are forcibly transferred toward the nozzle portion 7. At this time, the lignocellulosic fiber A and the thermoplastic resin B are kneaded together. The set temperatures of the heating units 81 in all sections S1 to S11 are maintained at a temperature less than the melting point of the thermoplastic resin B. In the first embodiment, during the kneading step, the lignocellulosic fiber A and the thermoplastic resin B are heated by kneading heat generated when they are mixed by rotation of the screws 3, and also heated by heat applied by the heating device 8 as a result of which the following advantages are achieved while maintaining the set temperatures of the heating units 81 at a temperature less than the melting point of the thermoplastic resin B: an advantage in that disadvantages caused by high temperature heating are suppressed; and an advantage in that the lignocellulosic fiber A and the thermoplastic resin B are heated to a temperature greater than or equal to the melting point of the thermoplastic resin B.

In the first embodiment, after the kneading step, the mixture is discharged from the extrusion port 71, and a mixed composition C is thereby obtained.

In the first embodiment, the production method preferably includes, after the kneading step, a pelletizing step of discharging the mixture from the extrusion port 71, and then cutting the discharged mixed composition C in the lengthwise direction into pellets. With the pelletizing step, the mixed composition C can be efficiently used. As the method for cutting the mixed composition C in the pelletizing step, a known method can be used such as a hot cut method in which the mixed composition C is cut without cooling the mixed composition C with water, a method in which the mixed composition C is cut after cooling the mixed composition C with air or water, or a method in which the mixed composition C is discharged into water, and then the mixed composition C is cut in water. The discharged mixed composition C can be cut into a desired length.

According to the production method of the first embodiment, in the kneading step, the lignocellulosic fiber A and the thermoplastic resin B are kneaded together while maintaining the set temperatures of the heating units 81 anywhere in the axial direction of the cylinder 2 at a temperature less than the melting point of the thermoplastic resin B. Accordingly, a mixed composition of the lignocellulosic fiber and the thermoplastic resin with excellent presentation performance can be obtained efficiently and easily. Hereinafter, this point will be described in detail.

As is clear from the fact that a high purity cellulose is conventionally used in a limited manner as disclosed in Patent Literatures 1 to 7, it is common sense among those skilled in the art that a lignocellulosic fiber that contains hemicellulose or lignin that are thermally unstable cannot be used when kneading with a thermoplastic resin because the lignocellulosic fiber causes thermal decomposition. Also, as disclosed in paragraph [0126] of Patent Literature 7, it is common sense among those skilled in the art that, when kneading a thermoplastic resin and a filler using a multi screw extruding/kneading apparatus, usually, it is preferable to knead the thermoplastic resin and the filler at a temperature in a temperature range higher than the melting point of the resin by 20°C.

Also, it is also empirically known that, when the heater temperature is set to a temperature that causes a difference between the heater (cylinder) temperature and the resin temperature, the resin is likely to undergo discoloration. For this reason, it has been considered that the heater temperature should not be set to a temperature in a temperature range lower than the melting point of the resin because it is likely to cause problems.

However, the inventors of the present application found the following findings. When a lignocellulosic fiber and a thermoplastic resin are kneaded together or a mixture of a lignocellulosic fiber and a thermoplastic resin is kneaded using a multi screw extruding machine equipped with two or more screws, the lignocellulosic fiber, which has a specific gravity smaller than that of a conventionally used filler such as talc or a glass fiber, drastically increases in number. Accordingly, due to the effect of increasing kneading heat, the effect of retaining heat by the lignocellulosic fiber, the thermo-plasticization effect of lignin, and the like, even when the lignocellulosic fiber and the thermoplastic resin are kneaded together while the set temperatures of the heating units 81 are maintained at a temperature less than the melting point of the thermoplastic resin, the thermoplastic resin melts, and thus the mixture of the lignocellulosic fiber and the molten thermoplastic resin can be extruded from the nozzle portion 7 without problems, and the thermal history received by the lignocellulosic fiber can be considerably reduced.

According to the production method of the first embodiment, the thermal history received by the lignocellulosic fiber can be considerably reduced. For this reason, problems such as the generation of gas, odor, discoloration, and tar, and the occurrence of an excessive increase in resin pressure, a pulsation during strand squeezing, a strand breakage, and a skin layer fracture are suppressed as compared with conventional methods, and it is therefore possible to obtain a mixed composition of a lignocellulosic fiber and a thermoplastic resin that is improved and more practical as compared with those produced using conventional methods.

As described above, according to the production method of the first embodiment, it is possible to efficiently and easily obtain a mixed composition of a lignocellulosic fiber and a thermoplastic resin that has an excellent presentation performance.

The production method of the first embodiment preferably includes, after the kneading step, a high temperature heating step during extrusion, wherein the set temperature of a heating unit 81 provided near the extrusion port 71 to a temperature greater than or equal to the lowest one of the set temperatures of the heating units 81 in the kneading step. With this configuration, the mixed composition C can be easily discharged from the extrusion port 71. The high temperature heating step during extrusion can be performed by, for example, setting the set temperature of a heating unit 81 provided in the nozzle portion 7, specifically, the set temperature of a heating unit 81 provided in the section S11 to a temperature greater than or equal to the lowest one of the set temperatures of the heating units 81 in the kneading step.

Next, a production method according to a second embodiment of the present invention will be described. The second embodiment will be described focusing mainly on differences from the first embodiment. Features not described specifically in the second embodiment are the same as those of the first embodiment, and the description of the first embodiment is applied as appropriate.

The production method of the second embodiment includes a kneading step of kneading a lignocellulosic fiber A and a thermoplastic resin B using a twin screw extruding machine 1.

The kneading step of the second embodiment includes a high temperature kneading step and a low temperature kneading step.

The high temperature kneading step is performed in at least one section. In the second embodiment, the high temperature kneading step is performed in the section S1. In the high temperature kneading step, a lignocellulosic fiber A and a thermoplastic resin B are kneaded together while maintaining the set temperature of a heating unit 81 provided in the section S1 to a temperature greater than or equal to the melting point of the thermoplastic resin B. In the high temperature kneading step, the lignocellulosic fiber A and the thermoplastic resin B are heated to a temperature greater than or equal to the melting point of the thermoplastic resin B, as a result of which a mixture of the lignocellulosic fiber A and the molten thermoplastic resin B is obtained. The high temperature kneading step may be performed in only one section or in two or more sections.

The low temperature kneading step is performed after the high temperature kneading step. The low temperature kneading step is performed in at least one section. In the second embodiment, the low temperature kneading step is performed in the sections S2 to S11. In the low temperature kneading step, the mixture obtained in the high temperature kneading step is kneaded while maintaining the set temperatures of the heating units 81 to a temperature less than the melting point of the thermoplastic resin B. Also, in the present embodiment, after the low temperature kneading step, the mixture is discharged from the extrusion port 71, and a mixed composition C is thereby obtained. The low temperature kneading step may be performed in only one section or in two or more sections.

Due to the effect of increasing kneading heat, the effect of retaining heat by the lignocellulosic fibers, the thermoplasticization effect of lignin, and the like, which are obtained by use of the lignocellulosic fiber that has a small specific gravity, a temperature decrease can be suppressed. For this reason, even when the set temperatures of the heating units are maintained at a temperature less than the melting point of the thermoplastic resin, it is possible to prevent an increase in viscosity that negatively affects the process of kneading the lignocellulosic fiber and the molten thermoplastic resin.

In the second embodiment, the ratio of the number of sections where the low temperature kneading step is performed relative to the number of sections where a step subsequent to the high temperature kneading step in the twin screw extruding machine 1 (hereinafter, the ratio will be also referred to as "section rate") is preferably 15% or more and 100% or less, more preferably 20% or more and 100% or less, and even more preferably 25% or more and 100% or less. By setting the section rate within the above-described range, the effect of efficiently and easily obtaining a mixed composition of a lignocellulosic fiber and a thermoplastic resin that has an excellent presentation performance can be more remarkably exhibited. The section rate can be calculated using the following equation (1).

Section rate % = {(the number of sections where the low temperature kneading step is performed) = (the number of sections where a step subsequent to the high temperature kneading step is performed)} $\times$ 100 ••• (1)

Also, in the second embodiment, in the twin screw extruding machine 1, the ratio of the time required for the mixture to pass through above the sections where the low temperature kneading step is performed relative to the time required for the mixture to pass through above the sections where a step subsequent to the high temperature kneading step is performed is preferably 10% or more and 100% or less, more preferably 15% or more and 100% or less, and even more preferably 20% or more and 100% or less. By setting the time ratio within the above-described range, the effect of efficiently and easily obtaining a mixed composition of a lignocellulosic fiber and a thermoplastic resin that has an excellent presentation performance can be more remarkably exhibited. The time ratio can be calculated using the following equation (2).

Time ratio % = {(the time required for the mixture to pass through above the sections where the low temperature kneading step is performed) = (the time required for the mixture to pass through above the sections where a step subsequent to the high temperature kneading step is performed)} $\times$ 100 ••• (2)

Next, features that are common to the first embodiment and the second embodiment will be described.

In the first and second embodiments, in the case where the thermoplastic resin is polypropylene, when the set temperatures of the heating units are maintained at a temperature less than the melting point of the thermoplastic resin, the set temperatures are set to be lower than the melting point of the thermoplastic resin by preferably 10 to 140°C, more preferably 10 to 130°C, and even more preferably 10 to 120°C. With this configuration, the thermal history received by the lignocellulosic fiber can be further reduced. As used herein, the term "thermal history" refers to the amount of heat externally received by the material kneaded in the kneading space of the cylinder from the heating device.

Also, in the first and second embodiments, in the case where the thermoplastic resin is polyamide 6, when the set temperatures of the heating units are maintained at a temperature less than the melting point of the thermoplastic resin, the set temperatures are set to be lower than the melting point of the thermoplastic resin by preferably 10 to 210°C, more preferably 10 to 200°C, and even more preferably 10 to 190°C. With this configuration, the thermal history received by the lignocellulosic fiber can be further reduced.

Also, the production methods of the first and second embodiments may include, for example, before introducing the thermoplastic resin and the lignocellulosic fiber into the twin screw extruding machine, the following steps of: pre-drying the lignocellulosic fiber in advance using a high-speed stirring apparatus such as a Henschel mixer; and kneading and dispersing the thermoplastic resin and the lignocellulosic fiber as needed. Even when these steps are further included, through the step of kneading the lignocellulosic fiber and the thermoplastic resin together while maintaining the set temperatures of the heating units to a temperature less than the melting point of the thermoplastic resin, it is possible to achieve the purpose of reducing the thermal history received by the lignocellulosic fiber without applying excessive heat from the outside.

Mixed Composition of Lignocellulosic Fiber and Thermoplastic Resin

Physical properties of the mixed composition of the lignocellulosic fiber and thermoplastic resin produced using the production method of the first or second embodiment vary depending on the composition, the type of resin, and the application. Accordingly, it is difficult to uniquely define the physical properties. The mixing ratio (mass ratio) of the lignocellulosic fiber and the thermoplastic resin in the mixed composition produced using the production method of the present embodiment may be, for example, 1:99 to 99:1. The mixing ratio is preferably 5:95 to 90:10, and more preferably 10:90 to 80:20.

The mixed composition produced using the production method of the first or second embodiment may be used directly to form into a fiber reinforced resin material that contains the mixed composition, or may be supplied directly to a molding apparatus for molding a molded article. Alternatively, the mixed composition may be supplied to the molding apparatus after adding a thermoplastic resin thereto. In the case where the mixed composition produced using the production method of the first or second embodiment is supplied directly to the molding apparatus, the mixing ratio (mass ratio) of the lignocellulosic fiber can be set to, for example, 1% or more and 70% or less. In the case where the mixed composition is supplied to the molding apparatus after adding a thermoplastic resin thereto, the mixing ratio (mass ratio) of the lignocellulosic fiber can be set to, for example, 30% or more and 99% or less.

The specific gravity of the mixed composition produced using the production method of the first or second embodiment is 0.7 to 1.7, and preferably 0.8 to 1.6, and more preferably 0.9 to 1.5 although it varies depending on the mixing ratio or the presence of other additives (for example, glass fiber, talc, calcium carbonate, basalt fiber, and the like that have a large specific gravity).

Also, the bulk density of the mixed composition produced using the production method of the first or second embodiment is 100 to 800 kg/m$^3$, and preferably 150 to 600 kg/m$^3$, and more preferably 200 to 500 kg/m$^3$ although it also varies depending on the mixing ratio or the presence of other additives.

Also, the moisture content of the mixed composition produced using the production method of the first or second embodiment at the time of transaction may be 0 to 20%, and preferably 0 to 15%, and more preferably 0 to 10%. At this time, the moisture content can be calculated using the following equation (3). A method in which the amount of moisture reduced through drying or the like is defined as the moisture content, a method in which the moisture content is determined using a commercially available moisture meter (for example, a Karl Fischer moisture meter or the like), or the like can be used as appropriate.

$$\text{Moisture content } \% = \{(\text{weight of water})/(\text{total weight})\} \times 100 \cdots (3)$$

Lignocellulosic Fiber Reinforced Resin Material

The mixed composition produced using the production method according to the first or second embodiment contains the lignocellulosic fiber that is renewable, light in weight, and highly elastic, and has excellent LCA evaluation.

Accordingly, when the mixed composition is used as a fiber reinforced resin material, it is possible to obtain a high-performance fiber reinforced resin material that has an excellent weight reduction effect, an excellent reinforcement effect, and an excellent LCA improvement effect. For this reason, the fiber reinforced resin material (hereinafter also referred to as "lignocellulose fiber resin reinforced material") that contains the mixed composition produced using the production method according to the first or second embodiment can be suitably used in the transportation industry equipment sector, in particular, the automobile industry sector.

The lignocellulose fiber resin reinforced material may further contain various types of additives as long as the advantageous effects of the present invention are not impaired. Examples of the additives include a preservative, an insecticide, an antifungal agent, a water repellent, an ultraviolet absorber, a flame retardant, a filler, a coupling agent, a rubber, an elastomer, a defoamer, a lubricant, a pigment, a colorant, an anti-foaming agent, a foaming agent, a wax, a release agent, a fluidity improving agent, a strand reinforcement agent, an antioxidant, an adsorbent, a deodorizer, and the like. These may be used alone or in a combination of two or more. Also, these additives can be mixed as appropriate at any stage including the process before the mixed composition is formed into the lignocellulosic fiber reinforced resin material.

The lignocellulose fiber resin reinforced material contains the mixed composition produced using the production method according to the first or second embodiment at a mass ratio of preferably 5% or more and 100% or less, more preferably 10% or more and 100% or less, and even more preferably 15% or more and 100% or less.

It goes without saying that the lignocellulose reinforced resin material encompasses not only the form of a final product, but also a raw material for producing the product such as, for example, a mixed composition of a lignocellulosic fiber and a thermoplastic resin, an intermediate produced during production of the mixed composition of the lignocellulosic fiber and the thermoplastic resin through mixing, and a mixture thereof.

The mixed composition of the lignocellulosic fiber and the thermoplastic resin produced using the production method of the present invention may be sold in the form of a mixed composition, or an intermediate such as a master batch for dilution, a final molded article, or an aggregate or an assembly that contains the molded article.

Also, by using a molded article that contains the mixed composition produced using the production method according to the first or second embodiment, the application of the mixed composition can be extended to various applications other than the transportation/mobile industry equipment sector such as automobile, truck, aircraft, ship, and drone sectors. Examples of the various applications include industrial/household electric appliance products, architectural/civil engineering products, store/office furniture products, fixture products, stationery/household goods products, and the like.

The molded article contains the mixed composition produced using the production method according to the first or second embodiment at a mass ratio of preferably 5% or more and 100% or less, more preferably 10% or more and 100% or less, and even more preferably 15% or more and 100% or less.

Up to here, preferred embodiments of the present invention have been described. However, the present invention is not limited to the embodiments given above, and can be changed as appropriate.

For example, the production method of the second embodiment may include, after the low temperature kneading step, a step of kneading the mixture while maintaining the set temperatures of the heating units 81 at a temperature greater than or equal to the melting point of the thermoplastic resin B.

**Examples**

Hereinafter, the present invention will be described more specifically based on examples. However, the present invention is not limited in any way to the examples given below.

Production of Mixed Composition of Lignocellulosic Fiber and Thermoplastic Resin

Mixed compositions of Examples 1 to 5 and Comparative Examples 1 to 4 described below were produced based on the production method of the second embodiment described above by mixing a wood fiber (called thermo mechanical pulp or MDF fiber) composed mainly of pinus radiate with a thermoplastic resin and additives as appropriate, and kneading them in a twin screw extrusion/kneading apparatus by setting various heater temperatures. A mixed composition of Example 6 was produced based on the production method of the first embodiment.

The section rate shown below was calculated using the equation (1) given above.

**Example 1**

The material composition and the rotation speed and the section rate of the twin screw extruding machine used to produce the mixed composition of Example 1 are shown below. Also, the set temperatures of the heating units in the sections of the twin screw extruding machine used in Example 1 are shown in Table 1.

Thermoplastic resin: 45 parts by mass of polyamide 6 (CM1017 available from Toray Industries, Inc.)
Compatibilizing agent: 5 parts by mass of maleic acid-modified polypropylene (MG441P available from Riken Vitamin Co., Ltd.)
Lignocellulosic fiber: 50 parts by mass
Screw rotation speed: 150 rpm
Resin melting point: 225°C
Section rate: 100%

[Table 1]

| Section | S1 (material introducing portion) | S 2 | S 3 | S 4 | S 5 | S 6 | S 7 | S 8 | S 9 | S1 0 | S11 (nozzle portion) |
|---|---|---|---|---|---|---|---|---|---|---|---|
| Temperature (°C) | 230 | 7 0 | 7 0 | 7 0 | 7 0 | 7 0 | 7 0 | 7 0 | 7 0 | 70 | 210 |

**Example 2**

The material composition and the rotation speed and the section rate of the twin screw extruding machine used to produce the mixed composition of Example 2 are shown below. Also, the set temperatures of the heating units in the sections of the twin screw extruding machine used in Example 2 are shown in Table 2.

Thermoplastic resin: 45 parts by mass of polyamide 6 (CM1007 available from Toray Industries, Inc.)
Compatibilizing agent: 5 parts by mass of maleic acid-modified polypropylene (MG441P available from Riken Vitamin Co., Ltd.)
Lignocellulosic fiber: 50 parts by mass
Screw rotation speed: 150 rpm
Resin melting point: 225°C
Section rate: 100%

[Table 2]

| Section | S1 (material introducing portion) | S 2 | S 3 | S 4 | S 5 | S 6 | S 7 | S 8 | S 9 | S1 0 | S11 (nozzle portion) |
|---|---|---|---|---|---|---|---|---|---|---|---|
| Temperature (°C) | 230 | 7 0 | 7 0 | 7 0 | 7 0 | 7 0 | 7 0 | 7 0 | 7 0 | 70 | 210 |

**Example 3**

The material composition and the rotation speed and the section rate of the twin screw extruding machine used to produce the mixed composition of Example 3 are shown below. Also, the set temperatures of the heating units in the sections of the twin screw extruding machine used in Example 3 are shown in Table 3.

Thermoplastic resin: 45 parts by mass of polyamide 12 (UBESTA3024U available from UBE Corporation)
Compatibilizing agent: 5 parts by mass of maleic acid-modified polypropylene (MG441P available from Riken Vitamin Co., Ltd.)
Lignocellulosic fiber: 50 parts by mass
Screw rotation speed: 150 rpm
Resin melting point: 180°C
Section rate: 90%

[Table 3]

| Section | S1 (material introducing portion) | S 2 | S 3 | S 4 | S 5 | S 6 | S 7 | S 8 | S 9 | S10 | S11 (nozzle portion) |
|---|---|---|---|---|---|---|---|---|---|---|---|
| Temperature (°C) | 180 | 7 0 | 7 0 | 7 0 | 7 0 | 7 0 | 7 0 | 7 0 | 7 0 | 70 | 190 |

**Example 4**

The material composition and the rotation speed and the section rate of the twin screw extruding machine used to produce the mixed composition of Example 4 are shown below. Also, the set temperatures of the heating units in the sections of the twin screw extruding machine used in Example 4 are shown in Table 4.

Thermoplastic resin: 45 parts by mass of polypropylene (Z101A available from Sumitomo Chemical Co., Ltd.)
Compatibilizing agent: 5 parts by mass of maleic acid-modified polypropylene (MG441P available from Riken Vitamin Co., Ltd.)
Lignocellulosic fiber: 50 parts by mass
Screw rotation speed: 150 rpm
Resin melting point: 160°C
Section rate: 90%

[Table 4]

| Section | S1 (material introducing portion) | S2 | S3 | S4 | S5 | S6 | S7 | S8 | S9 | S10 | S11 (nozz le portio n) |
|---|---|---|---|---|---|---|---|---|---|---|---|
| Temperature (°C) | 180 | 13 0 | 13 0 | 13 0 | 13 0 | 13 0 | 13 0 | 13 0 | 13 0 | 13 0 | 180 |

**Example 5**

The material composition and the rotation speed and the section rate of the twin screw extruding machine used to produce the mixed composition of Example 5 are shown below. Also, the set temperatures of the heating units in the sections of the twin screw extruding machine used in Example 5 are shown in Table 5.

Thermoplastic resin: 25 parts by mass of polypropylene (U501E1 available from Sumitomo Chemical Co., Ltd.)
Compatibilizing agent: 5 parts by mass of maleic acid-modified polypropylene (MG441P available from Riken Vitamin Co., Ltd.)
Lignocellulosic fiber: 70 parts by mass
Screw rotation speed: 300 rpm
Resin melting point: 160°C
Section rate: 90%

[Table 5]

| Section | S1 (material introducing portion) | S2 | S3 | S4 | S5 | S6 | S7 | S8 | S9 | S10 | S11 (nozz le portio n) |
|---|---|---|---|---|---|---|---|---|---|---|---|
| Temperature (°C) | 180 | 13 0 | 13 0 | 13 0 | 13 0 | 13 0 | 13 0 | 13 0 | 13 0 | 13 0 | 170 |

**Example 6**

The material composition and the rotation speed of the twin screw extruding machine used to produce the mixed composition of Example 6 are shown below. Also, the set temperatures of the heating units in the sections of the twin screw extruding machine used in Example 6 are shown in Table 6.

Thermoplastic resin: 69 parts by mass of polypropylene (AU891E2 available from Sumitomo Chemical Co., Ltd)
Compatibilizing agent: 1 part by mass of maleic acid-modified polypropylene (MG441P available from Riken Vitamin Co., Ltd.)
Lignocellulosic fiber: 30 parts by mass
Screw rotation speed: 230 rpm
Resin melting point: 160°C

[Table 6]

| Section | S1 (material introducing portion) | S2 | S3 | S4 | S5 | S6 | S7 | S8 | S9 | S10 | S11 (nozzle portion) |
|---|---|---|---|---|---|---|---|---|---|---|---|
| Temperature (°C) | 140 | 135 | 135 | 130 | 130 | 130 | 130 | 130 | 130 | 130 | 150 |

**Comparative Example 1**

The material composition and the rotation speed and the section rate of the twin screw extruding machine used to produce the mixed composition of Comparative Example 1 are shown below. Also, the set temperatures of the heating units in the sections of the twin screw extruding machine used in Comparative Example 1 are shown in Table 7.

Thermoplastic resin: 45 parts by mass of polyamide 6 (CM1017 available from Toray Industries, Inc.)
Compatibilizing agent: 5 parts by mass of maleic acid-modified polypropylene (MG441P available from Riken Vitamin Co., Ltd.)
Lignocellulosic fiber: 50 parts by mass
Screw rotation speed: 150 rpm
Resin melting point: 225°C
Section rate: 0%

[Table 7]

| Section | S1 (material introducing portion) | S2 | S3 | S4 | S5 | S6 | S7 | S8 | S9 | S10 | S11 (nozzle portion) |
|---|---|---|---|---|---|---|---|---|---|---|---|
| Temperature (°C) | 230 | 230 | 230 | 230 | 230 | 230 | 230 | 230 | 230 | 230 | 230 |

**Comparative Example 2**

The material composition and the rotation speed and the section rate of the twin screw extruding machine used to produce the mixed composition of Comparative Example 2 are shown below. The set temperatures of the heating units in the sections of the twin screw extruding machine used in Comparative Example 2 are shown in Table 8.

Thermoplastic resin: 45 parts by mass of polyamide 6 (CM1007 available from Toray Industries, Inc.)
Compatibilizing agent: 5 parts by mass of maleic acid-modified polypropylene (MG441P available from Riken Vitamin Co., Ltd.)
Lignocellulosic fiber: 50 parts by mass
Screw rotation speed: 150 rpm
Resin melting point: 225°C
Section rate: 0%

[Table 8]

| Section | S1 (material introducing portion) | S2 | S3 | S4 | S5 | S6 | S7 | S8 | S9 | S10 | S11 (nozz le portio n) |
|---|---|---|---|---|---|---|---|---|---|---|---|
| Temperat ure (°C) | 230 | 230 | 230 | 230 | 230 | 230 | 230 | 230 | 230 | 230 | 230 |

## Comparative Example 3

The material composition and the rotation speed and the section rate of the twin screw extruding machine used to produce the mixed composition of Comparative Example 3 are shown below. The set temperatures of the heating units in the sections of the twin screw extruding machine used in Comparative Example 3 are shown in Table 9.

Thermoplastic resin: 45 parts by mass of polypropylene (Z101A available from Sumitomo Chemical Co., Ltd)
Compatibilizing agent: 5 parts by mass of maleic acid-modified polypropylene (MG441P available from Riken Vitamin Co., Ltd.)
Lignocellulosic fiber: 50 parts by mass
Screw rotation speed: 150 rpm
Resin melting point: 160°C
Section rate: 0%

[Table 9]

| Section | S1 (material introducing portion) | S2 | S3 | S4 | S5 | S6 | S7 | S8 | S9 | S10 | S11 (nozz le portio n) |
|---|---|---|---|---|---|---|---|---|---|---|---|
| Temperat ure (°C) | 180 | 180 | 180 | 180 | 180 | 180 | 180 | 180 | 180 | 180 | 180 |

## Comparative Example 4

The material composition and the rotation speed and the section rate of the twin screw extruding machine used to produce the mixed composition of Comparative Example 4 are shown below. The set temperatures of the heating units in the sections of the twin screw extruding machine used in Comparative Example 4 are shown in Table 10.

Thermoplastic resin: 25 parts by mass of polypropylene (U501E1 available from Sumitomo Chemical Co., Ltd)
Compatibilizing agent: 5 parts by mass of maleic acid-modified polypropylene (MG441P available from Riken Vitamin Co., Ltd.)
Lignocellulosic fiber: 70 parts by mass
Screw rotation speed: 300 rpm
Resin melting point: 160°C
Section rate: 0%

[Table 10]

| Section | S1 (material introducing portion) | S2 | S3 | S4 | S5 | S6 | S7 | S8 | S9 | S10 | S11 (nozz le portio n) |
|---|---|---|---|---|---|---|---|---|---|---|---|
| Temperat ure (°C) | 180 | 180 | 180 | 180 | 180 | 180 | 180 | 180 | 180 | 180 | 180 |

## Evaluation Result

Each of the mixed compositions of Examples 1 to 6 and Comparative Examples 1 to 4 was subjected to evaluation to determine the presentation performance and whether or not the mixed composition can be molded into a molded article using an injection molding apparatus. Whether or not the mixed composition can be molded into a molded article was determined by determining whether or not a test piece can be formed. Each of the mixed compositions was evaluated based on the evaluation criteria shown below. The results are shown in Table 11.

Evaluation Criteria

A: Practically usable without problems
B: Practically usable, but it would be better if an improvement is made
C: Probably practically usable, but a significant improvement is required
D: Not practically usable

[Table 11]

| | | Result of observing mixed composition | | Formation of test piece | |
|---|---|---|---|---|---|
| Example 1 | A | A mixed composition that was cream-colored inside and brown outside was discharged. A slight die drool was observed, but the internal pores and the skin state of the discharged mixed composition were both good. | | A | A test piece was successfully formed, with a slight odor. |
| Example 2 | A | A mixed composition that was cream-colored inside and brown outside was discharged. A slight die drool was observed, but the internal pores and the skin state of the discharged mixed composition were both good. | | A | A test piece was successfully formed, with a slight odor. |
| Example 3 | A | A mixed composition that was cream-colored both inside and outside was discharged. A slight die drool was observed, but the internal pores and the skin state of the discharged mixed composition were both good. | | A | A test piece was successfully formed, with a slight odor. |
| Example 4 | A | A mixed composition that was cream-colored inside and brown outside was discharged. A slight die drool was observed, but the internal pores and the skin state of the discharged mixed composition were both good. | | A | A test piece was successfully formed, with a slight odor. |
| Example 5 | A | A mixed composition that was brownish cream-colored inside and brown outside was discharged. A slight die drool was observed, but the internal pores and the skin state of the discharged mixed composition were both good. | | A | A test piece was successfully formed, with a slight odor. |
| Example 6 | A | A mixed composition that was brownish cream-colored inside and brown outside was discharged. A slight die drool was observed, but the internal pores and the skin state of the discharged mixed composition were both good. | | A | A test piece was successfully formed, with a slight odor. |
| Comparative Example 1 | D | A blackened mixed composition was discharged. White smoke, a burnt odor, internal pores in the discharged mixed composition formed due to gas, and a skin melt fracture | | D | The mixed composition was determined as not suitable for forming a test piece. |

| | | were observed. | | | |
|---|---|---|---|---|---|
| Comparative Example 2 | D | A blackened mixed composition was discharged. White smoke, a burnt odor, internal pores in the discharged mixed composition formed due to gas, and a skin melt fracture were observed. | | D | The mixed composition was determined as not suitable for forming a test piece. |

(continued)

| | | A dark brown mixed composition was discharged. White smoke, an odor, internal pores in the discharged mixed composition formed due to gas, and a skin melt fracture were observed to some extent. | | A test piece was successfully formed, but the test piece was more dark brown and had a burnt odor. |
|---|---|---|---|---|
| Comparative Example 3 | B | A dark brown mixed composition was discharged. White smoke, an odor, internal pores in the discharged mixed composition formed due to gas, and a skin melt fracture were observed to some extent. | C | A test piece was successfully formed, but the test piece was more dark brown and had a burnt odor. |
| Comparative Example 4 | B | A dark brown mixed composition was discharged. White smoke, an odor, internal pores in the discharged mixed composition formed due to gas, and a skin melt fracture were observed to some extent. | C | A test piece was successfully formed, but the test piece was more dark brown and had a burnt odor. |

As shown in Table 11, it can be seen that, when the production methods of Examples 1 to 5 in which the kneading step includes a high temperature kneading step and a low temperature kneading step performed after the high temperature kneading step, and the production method of Example 6 in which the lignocellulosic fibers and the thermoplastic resin are kneaded in the kneading step while maintaining the set temperatures of the heating units anywhere in the axial direction of the cylinder to a temperature less than the melting point of the thermoplastic resin are used, the thermal decomposition of the mixed composition of the lignocellulosic fibers and the thermoplastic resin can be effectively suppressed. More specifically, Examples 1 to 6 demonstrate that problems that occur during production such as solidification and deposition of the resin, and an excessive increase of kneading torque, as well as problems such as the occurrence of discoloration and odor inherent to lignocellulose resin that contains lignin, the generation of excessive internal pores due to gas, and the occurrence of skin melt fracture can be avoided to a level that does not cause any practical problem.

Industrial Applicability

According to the method for producing a mixed composition of the present invention, it is possible to efficiently and easily obtain a mixed composition of a lignocellulosic fiber and a thermoplastic resin that has an excellent presentation performance.
Also, according to the fiber reinforced resin material and the molded article of the present invention, an excellent weight reduction effect, an excellent reinforcement effect, and an excellent LCA improvement effect are exhibited.

**Claims**

1. A method for producing a mixed composition comprising a lignocellulosic fiber and a molten thermoplastic resin that are kneaded together, the mixed composition being for use as a fiber reinforced resin material,
the method comprising:

a kneading step of kneading the lignocellulosic fiber and the thermoplastic resin together using a multi screw extruding machine equipped with two or more screws,
wherein the multi screw extruding machine includes:

a cylinder that internally has a kneading space in which the screws are provided; and
a heating device that is provided on an outer circumferential portion of the cylinder and includes a plurality of heating units arranged in an axial direction of the cylinder, and

in the kneading step, the lignocellulosic fiber and the thermoplastic resin are kneaded together while maintaining set temperatures of the heating units anywhere in the axial direction at a temperature less than a melting point of the thermoplastic resin.

2. A method for producing a mixed composition comprising a lignocellulosic fiber and a molten thermoplastic resin that are kneaded together, the mixed composition being for use as a fiber reinforced resin material,
the method comprising:

a kneading step of kneading the lignocellulosic fiber and the thermoplastic resin together using a multi screw extruding machine equipped with two or more screws,
wherein the multi screw extruding machine includes:

a cylinder that internally has a kneading space in which the screws are provided; and
a heating device that is provided on an outer circumferential portion of the cylinder and includes a plurality of heating units arranged in an axial direction of the cylinder, and

the kneading step includes: a high temperature kneading step; and a low temperature kneading step performed after the high temperature kneading step, when a heating region that can be heated by the heating device of the multi screw extruding machine is divided into a plurality of sections in the axial direction of the cylinder, each section including one or more of the plurality of heating units,
the high temperature kneading step being the step of kneading the lignocellulosic fiber and the thermoplastic resin together while maintaining the set temperature of the one or more heating units in at least one of the plurality of sections at a temperature greater than or equal to a melting point of the thermoplastic resin to obtain a mixture of the lignocellulosic fiber and the molten thermoplastic resin, and
the low temperature kneading step being the step of kneading the mixture while maintaining the set temperature of the one or more heating units in at least one of the plurality of sections at a temperature less than the melting point of the thermoplastic resin.

3. The method for producing a mixed composition according to claim 2, wherein a ratio of number of sections where the low temperature kneading step is performed relative to number of sections where a step subsequent to the high temperature kneading step is performed is 15% or more and 100% or less.

4. The method for producing a mixed composition according to claim 2 or 3, wherein, in the multi screw extruding machine, a ratio of time required for the mixture to pass through above the sections when the low temperature kneading step is performed relative to time required for the mixture to pass through above the sections when a step subsequent to the high temperature kneading step to pass through is 10% or more and 100% or less.

5. The method for producing a mixed composition according to any one of claims 1 to 4, comprising: after the kneading step, a high temperature heating step during extrusion, wherein, in the high temperature heating step during extrusion, the set temperature of one of the heating units provided near an extrusion port is set to a temperature greater than or equal to a lowest one of the set temperatures of the heating units in the kneading step.

6. The method for producing a mixed composition according to any one of claims 1 to 5, wherein a mass ratio of lignin in the lignocellulosic fiber is 5% or more and 50% or less.

7. The method for producing a mixed composition according to any one of claims 1 to 6, wherein the lignocellulosic fiber has a length of 0.1 mm or more and 5.0 mm or less and a diameter of 5 $\mu$m or more and 50 $\mu$m or less.

8. The method for producing a mixed composition according to any one of claims 1 to 7, wherein the multi screw extruding machine is a twin screw extruding machine.

9. The method for producing a mixed composition according to any one of claims 1 to 8, wherein the thermoplastic resin is polypropylene, and when the set temperatures of the heating units are maintained at a temperature less than the melting point of the thermoplastic resin, the set temperatures are set to be lower than the melting point of the thermoplastic resin by 10°C to 140°C.

10. The method for producing a mixed composition according to any one of claims 1 to 9, wherein the thermoplastic resin is polyamide 6, and when the set temperatures of the heating units are maintained at a temperature less than the melting point of the thermoplastic resin, the set temperatures are set to be lower than the melting point of the thermoplastic resin by 10°C to 210°C.

11. The method for producing a mixed composition according to any one of claims 1 to 10, wherein the thermoplastic resin comprises one or more selected from the group consisting of polyethylene, polypropylene, polyvinyl alcohol, polyvinyl acetate, polyoxyethylene, polyvinyl chloride, polystyrene, polylactic acid, polyacetal, polyamides, polyhydroxyalkanes, polybutylene terephthalate, polybutylene succinate, modified resins thereof, and copolymer resins thereof.

**12.** The method for producing a mixed composition according to any one of claims 1 to 11, wherein the melting point of the thermoplastic resin is 100 to 260°C.

**13.** The method for producing a mixed composition according to any one of claims 1 to 12, comprising: after the kneading step, a pelletizing step of discharging a mixture of the lignocellulosic fiber and the molten thermoplastic resin from an extrusion port, and then cutting the discharged mixture in a lengthwise direction into pellets.

**14.** A fiber reinforced resin material comprising: the mixed composition produced using the method for producing a mixed composition according to any one of claims 1 to 13.

**15.** The fiber reinforced resin material according to claim 14, wherein the fiber reinforced resin material contains the mixed composition at a mass ratio of 5% or more and 95% or less.

**16.** A molded article comprising: the mixed composition produced using the method for producing a mixed composition according to any one of claims 1 to 13.

**17.** The molded article according to claim 16, wherein the molded article contains the mixed composition at a mass ratio of 5% or more and 100% or less.

Fig. 1

Fig. 2

## INTERNATIONAL SEARCH REPORT

International application No.

**PCT/JP2022/043078**

### A. CLASSIFICATION OF SUBJECT MATTER

**B27N 3/04**(2006.01)i; **B29B 7/48**(2006.01)i; **B29B 7/72**(2006.01)i
FI: B29B7/72; B27N3/04 E; B29B7/48

According to International Patent Classification (IPC) or to both national classification and IPC

### B. FIELDS SEARCHED

Minimum documentation searched (classification system followed by classification symbols)

B27N3/04; B29B7/48; B29B7/72

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2019/150907 A1 (I COMPOLOGY COMPANY LTD) 08 August 2019 (2019-08-08) paragraphs [0030]-[0079] | 1-17 |
| Y | WO 2015/080004 A1 (ADEKA CORPORATION) 04 June 2015 (2015-06-04) paragraphs [0045]-[0046] | 1-17 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 December 2022** | **10 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/043078**

| Patent document cited in search report | | | Publication date (day/month/year) | Patent family member(s) | Publication date (day/month/year) |
|---|---|---|---|---|---|
| WO | 2019/150907 | A1 | 08 August 2019 | (Family: none) | |
| WO | 2015/080004 | A1 | 04 June 2015 | US 2016/0347917 A paragraphs [0050]-[0051] | |

Form PCT/ISA/210 (patent family annex) (January 2015)

**EP 4 438 258 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009234047 A1
- JP 2004035705 A
- JP 2021084999 A
- WO 0021743 A1
- JP 2004277623 A
- JP 2011231237 A
- JP 2021066789 A